# EUROPEAN PATENT SPECIFICATION

(11) **EP 1 246 965 B1**
(45) Date of publication and mention of the grant of the patent: **22.09.2004**
(21) Application number: 00946710.1
(22) Date of filing: 05.07.2000
(51) Int. Cl.: D21H 17/65, D21C 9/00, D21C 11/00, C02F 1/52, C02F 1/62, C02F 11/12

(54) **METHOD FOR ELIMINATING DETRIMENTAL SUBSTANCES IN A PROCESS LIQUID**
VERFAHREN ZUR ENTFERNUNG VON SCHÄDLICHEN BESTANDTEILEN AUS EINER BEHANDLUNGSFLÜSSIGKEIT
ELIMINATION DE SUBSTANCES NUISIBLES D'UN LIQUIDE DE TRAITEMENT

(30) Priority: 09.07.1999 SE 9902636
(43) Date of publication of application: 09.10.2002
(73) Proprietor: Linde AG, 65189 Wiesbaden (DE)
(72) Inventor: KARLSSON, Anette, S-852 39 Sundsvall (SE); HAIAS, Liviu, S-856 45 Sundsvall (SE)
(74) Representative: Gellner, Bernd
(86) International application number: PCT/SE2000/001427
(87) International publication number: WO 2001/004415

(56) References cited:
- EP-A1- 0 737 774
- EP-A1- 0 911 443
- DE-A1- 3 144 314
- US-A- 5 139 613
- US-A- 5 830 364

## Description

### Technical field

The present invention relates to a method for eliminating detrimental substances in a process liquid, wherein the detrimental substances can comprise dissolved or suspended organic material or synthetic, organic material, such as wood resin, fibre fines, biological polymers or latex. Furthermore, the detrimental substances can comprise dissolved or suspended inorganic material, originating from Ca, P, Si, Mg, Mn, Fe, Cu, Al, Zn, Si or K, or other substances which are detrimental to the process in question.

The process liquid is advantageously fresh water, a liquor in apulp manufacturing process, process water in a paper manufacturing process, a liquid for the preparation of a paper coating composition, or waste water.

### Background of the invention

Within the field of pulp and paper manufacture, it is previously known that an addition of carbon dioxide (CO₂) to the process liquor or process water can give certain advantages.

Accordingly, it is previously known to add carbon dioxide to washing processes for alkaline paper pulp in order to achieve improved washing efficiency and runnability. It is also assumed that such carbon dioxide addition can reduce the risk of corrosion and the maintenance costs, increase the production, reduce the carry-over of COD and sodium to the subsequent process stages and the environmental loading and, furthermore, reduce the consumption of washing water and/or of bleaching chemicals in the subsequent bleaching process.

The addition of carbon dioxide to the washing process is thought to result in a locally reduced pH at the addition point, and in an increased content of carbonate in the washing system. A reduced pH during the washing results in an improved removal of inorganic substances as an effect of ion exchange and reduced swelling of the fibres. The reduced swelling also improves the dewatering ability of the pulp. The higher content of carbonate reduces the quantity of precipitated calcium soaps in the pulp and on the surfaces of the equipment. Instead a portion of these soaps becomes soluble and acts as "detergents" in the system by means of contributing to a reduced surface tension of the liquor, and an improved solubility and disperging of the dissolved organics, which reduces problems with resin deposits and foaming. This is partly thought to be the result of the carbon dioxide converting calcium soaps to sodium soaps. The addition of carbon dioxide is also claimed to give a more stable pH because of the buffering effect which is obtained by the hydrogen carbonate ions which are formed by the carbon dioxide.

From WO 98/56988, a process is previously known for stabilizing the pH of a pulp suspension by means of increasing its alkalinity with a combination of an alkali metal hydroxide and carbon dioxide addition in a sufficient quantity in order to obtain a buffering effect which stabilizes the pH. One advantage of the process is claimed to be that space-consuming and difficult handling of solid sodium bicarbonate can be avoided.

WO 88/04706 discloses a method in the washing of alkaline cellulosic pulp, for example sulphate pulp, CTMP and CMP, wherein the washing is performed in at least one stage. According to this document, greatly reduced washing losses of inorganic ions, as well as an improved washing-out of substances which give rise to chemical oxygen demand (COD), can be achieved by means of an addition of carbon dioxide.

EP 0 281 273 B1 discloses a process and an apparatus for manufacturing paper from alkaline cellulosic pulp produced by the delignification of cellulosic material. The cellulosic pulp is fibrillated in a refiner to form paper-forming pulp, wherein gaseous carbon dioxide is introduced into the pulp. The process is further said to comprise that the gaseous carbon dioxide is introduced upstream of the fibrillation stage in an amount which gives the pulp stream a pH between 8.5 and 6.5, wherein the introduction of carbon dioxide is regulated in response to measurements of the pH in the pulp stream. The disclosed process is reported to give advantages such as an improved and more stable pH control, improved physical properties of the finished paper, less corrosion, improved runnability of the paper machine, less waste, and a reduced need for certain chemical additives such as alum or aluminium sulphate. Furthermore, it is claimed that the use of sulphuric acid for pH control can be eliminated, which results in a higher brightness of the finished paper. The use of carbon dioxide is also claimed to reduce the build-up of barium sulphate and problems with deposits on the paper manufacturing equipment. According to EP 0 281 273 B1, the use of gaseous carbon dioxide provides considerable advantages also when manufacturing waste paper products, since the runnability of the paper machine and the associated equipment can be improved.

Furthermore, US-A-5,262,006 discloses a process for the manufacture of paper. The disclosed process is said to comprise preparing a pulp stock having a pH greater than 6.5 entirely or partly comprising cellulose fibre material containing 0.5 - 70 weight-% of calcium sulphate (gypsum), wherein the cellulose fibre material is selected from broke and waste paper. The process further comprises to form a suspension in an aqueous medium with the stock, to supply at least one of carbonate ions and hydrogen carbonate ions to the aqueous medium, and to adjust the pH of the aqueous medium to an alkaline value within the pH range 7.3 - 14.3 at a temperature of 25 °C to precipitate calcium carbonate, so that the calcium carbonate forms part of the suspension. The process further comprises to spread the suspension onto a wire screen, to form a paper on the wire screen, and to drain, press and dry the paper. According to US-A-5,262,006, the process provides a number of advantages, e.g. that broke originating from gypsum-coated paper can be reused without any problems with gypsum precipitation. Furthermore, it is claimed that the disclosed process enables the manufacture of a new grade of coated paper with a raised content of filler and improved optical properties, wherein the filler in the base paper entirely or partly consists of precipitated calcium carbonate (CaCO₃), and the pigment of the coating layer consists entirely or partly of calcium sulphate (CaSO₄).

Furthermore, US-A-5,378,322 discloses the use of carbon dioxide in connection with the non-acidic sizing of paper. It is claimed that, in the disclosed process, the sizing reaction between alkylketene dimer sizing agent and cellulose fibres is catalysed by means of the carbon dioxide providing bicarbonate ions which catalyse the reaction. Thereby, it is claimed that the bicarbonate ions may be generated by dissociation of the carbon dioxide in water, or by reaction of the carbon dioxide with calcium carbonate incorporated in the pulp as a filler for the paper or with other alkali present.

Another previously known application for carbon dioxide is when manufacturing so-called "filler-loaded" pulp fibres. This can be achieved by means of passing a mixture of pulp, calcium hydroxide, and carbon dioxide through a refiner with open plates. As a result, calcium carbonate is precipitated and deposited within the fibre lumens of the individual fibres. This type of "filler-loaded" pulp fibres can be used for increasing the opacity of a paper sheet without any loss of paper strength.

When manufacturing wood-containing paper grades, so-called lignin-preserving bleaching is used. Today, lignin-preserving bleaching is usually performed in one or several bleaching stages using hydrogen peroxide. After the bleaching follows a storage tower or the like from which the pulp suspension is brought to one or several paper machines. Thereby, a frequently occurring problem is that the brightness of the pulp decreases during the retention time in the storage tower. The retention time can be 24h or more, wherein a brightness reduction of 4-7 ISO%-units is not unusual.

Also in connection with the recovery of coated paper broke, similar problems with brightness reduction of the pulp during intermediate storage time can occur. Thereby, it has been found that the brightness may have decreased with up to 10 ISO%-units when the recovered broke pulp, after its intermediate storage or retention time, finally is introduced into the pulp suspension on its way to the headbox of the paper machine.

When manufacturing paper grades containing kaolin (China clay) as a filler or coating component, it is normally necessary with an addition of sodium hydroxide (NaOH) in order to obtain an appropriate viscosity for dosing the kaolin suspension. The resulting high pH, however, has the disadvantage that it impairs the drainability of the suspension. Another problem associated with kaolin is that it usually contains undesired impurities, such as phosphorus (P), which can accumulate in the process water of the coating or paper machine and or be discharged into the waste water, something which of course is undesirable from an environmental point of view.

When recycling paper waste in so-called deinking processes, the waste paper raw material is disintegrated in a rotating drum or in a pulper in order to form a pulp suspension, which thereafter is deinked and otherwise cleaned by means of flotation and/or sedimentation. After the initial cleaning, the pulp suspension is screened in one or several screening stages. After the screening, the pulp is usually bleached with a combination of hydrogen peroxide and a complex-builder, e.g. EDTA. Thereby, a frequently occurring problem is that the pulp suspension, in spite of all the precedent cleaning and bleaching stages, still contains different detrimental substances, such as particles originating from so-called toner, and other suspended or dissolved organic or inorganic material. If left untreated in the pulp suspension, these detrimental substances can disturb the bleaching reactions and make it difficult to reach the brightness level which is required for the finished recycled paper product.

So-called thermo-groundwood pulp is also bleached with lignin-preserving bleaching and usually with hydrogen peroxide. The high temperature in the grinding process certainly gives a more careful fibre freeing than when manufacturing conventional groundwood pulp. but also results in a high content of dissolved organic material in the process water. Thereby, it has been found that such dissolved organic material, if left undisturbed in the pulp suspension, results in a high consumption of bleaching chemicals, and in a great risk of brightness reduction occurring in the pulp during an intermediate storage or retention time, or a risk of the finished paper exhibiting a strong yellowing tendency.

When purifying waste water originating from pulp or paper manufacturing processes, it is previously known with purification processes in which the waste water is purified by means of active sludge, i.e. different micro-organism cultures and organic material from their metabolism. When the waste water purification plant has been operating for a certain time, it usually becomes necessary to remove an excess amount of active sludge. A desirable way of disposal for active sludge is to combust the sludge in order to obtain heat energy. The combustion, however, requires a relatively high dry content of the sludge. In many cases, such a high dry content is difficult or very expensive to achieve, since the active sludge is difficult to dewater due to a high content of dissolved organic material, and therefore requires the use of a suitable drainage or retention agent. Furthermore, a conventional sludge dewatering process constitutes a risk for undesired discharges of dissolved or suspended organic material, or heavy metals, into the environment.

When manufacturing paper grades for packaging material, e.g. test liner, the temperature in the process water is often relatively low, and often lower than + 40 °C. This implies that also the solubility of different ions in the process water is relatively low. Thereby, in case the raw water of the paper mill exhibits a high hardness, problems with deposits of large quantities of calcium carbonate can occur in the process.

### Summary of the invention

The first object of the present invention is to provide a method which solves the above-mentioned problems.

In accordance with claim 1, this is achieved with a method for eliminating detrimental substances, wherein a process liquid has a first pH and, in addition to the detrimental substances, comprises metal ions and suspended material. Thereby, carbon dioxide is added to the process liquid in order to bring the process liquid to a second pH, lower than the first pH. According to the invention, the metal ions comprise hydroxide builders, wherein the carbon dioxide is added in an amount which causes the second pH to be between 8 and 6.5, so that the carbon dioxide primarily forms bicarbonate ions having a pH-buffering effect and the metal ions primarily form metal hydroxides. Thereafter, the detrimental substances coagulate or agglomerate with the metal hydroxides and are adhered to the suspended material so that they become inactive.

### Detailed description of preferred embodiments

In the following, the present invention will be described in greater detail. The method according to the invention is utilized for eliminating detrimental substances in a process liquid. Thereby, the detrimental substances preferably comprise dissolved or suspended organic material or synthetic, organic material, such as wood resin, fibre fines, biological polymers, latex or toner and/or dissolved or suspended inorganic material, originating from Ca, P, Si, Mg, Mn, Fe, Cu, Al, Zn, Si or K. Furthermore, also other substances which in some way are detrimental to the process in question can be eliminated by means of the method according to the invention.

The process liquid has a first pH and is preferably fresh water, a process liquor in a pulp manufacturing process, process water in a paper manufacturing process, a liquid for the preparation of a paper coating composition, or waste water.

In addition to the detrimental substances, the process liquid comprises metal ions and suspended material, wherein the metal ions comprise hydroxide builders. The metal ions preferably comprise Al³⁺, Fe³⁺, Fe²⁺, Zn²⁺, Cu²⁺ or a combination of these. However, the metal ions can also comprise other metals with the ability to form hydroxides.

The suspended material preferably comprises cellulose fibres, kaolin particles or active sludge, but also other suitable "carrier" materials are conceivable, such as fibres, fillers or pigments of other types.

In the method according to the invention, carbon dioxide is added to the process liquid in order to bring the process liquid to a second pH, lower than the first pH. According to the invention, the carbon dioxide is added in an amount which causes the second pH to be between 8 and 6.5. Preferably, the carbon dioxide is added in an amount which causes the second pH to be between 7 and 7.5.

The result of bringing the pH within the above-specified range(s) is that the carbon dioxide primarily forms bicarbonate ions having a pH-buffering effect, while the metal ions primarily form metal hydroxides. This enables the detrimental substances to coagulate or agglomerate with the metal hydroxides, after which the detrimental substances (and the metal hydroxides) are fixed onto the suspended material in order to subsequently be removed from the process liquid. Accordingly, also the "hydroxide-building" metal ions will be removed from the process liquid. Therefore, the method according to the invention also makes it possible to avoid an undesired build-up of the above-mentioned metal ions in the process liquid.

The suspended material with the thereto fixed metal ions and detrimental substances is preferably used for paper manufacturing or is incinerated with heat recovery.

In particularly preferred embodiments of the method according to the invention, the brightness of the suspended material, measured according to SCAN-P3:93, is stabilised or raised by means of the method. In such embodiments, the method according to the invention eliminates detrimental substances and metal ions, which otherwise could cause a discolouration or yellowing of the suspended material over the time, or destroy or impair the effect of a bleaching agent in a subsequent bleaching process.

In a first preferred embodiment of the method according to the invention, the suspended material comprises wood-containing pulp fibres which are subjected to a lignin-preserving bleaching in at least one bleaching stage and thereafter are stored in a storage tank during a retention time. In this embodiment, the carbon dioxide is added upstream or in the storage tank, so that the brightness loss of the wood-containing pulp fibres, measured according to SCAN-P3:93, is less than 3 ISO%-units during the retention time. In this embodiment, the above-defined detrimental substances and/or the metal ions in the process liquid are eliminated by means of the method according to the invention. In case hydrogen peroxide is used as a bleaching agent, this elimination will also prevent or at least slow down the decomposition of residual peroxide in the pulp suspension. If left untreated, the above-mentioned detrimental substances and/or metal ions could cause a discolouration or yellowing of the pulp fibres through chemical processes which are previously known *per se.* Such chemical processes are described e.g. in Journal of Pulp and Paper Science, p. 47- 51, Vol. 25, No.2, February 1999.

In an alternative, second preferred embodiment of the invention, the suspended material comprises kaolin particles suspended in the process liquid comprising a sodium hydroxide liquour. Thereby, the sodium hydroxide (NaOH) is used in order to control the viscosity of the kaolin suspension. In this embodiment, the detrimental substances comprise at least phosporus (P). Thereby, it is previously known that phosporus is a common impurity in kaolin, which is used as a filler or a pigment in a paper coating composition. Of course, phosporus and other metal impurities are undesired in the waste water effluent from the production of coated paper. In this alternative embodiment the carbon dioxide is added to the process liquid, i.e. the sodium hydroxide liquor, and makes it possible to remove the phosporus, together with the metal hydroxides formed by the metal ions, from the process liquid through the above-mentioned coagulationlagglomeration/fixing process. The result is that the suspended material obtains improved dewartering and a higher metal content, whereas the process liquid obtains a lower metal content, i.e. a lower content of both phosporus and other metal ions.

In a third preferred embodiment of the invention, the suspended material comprises pulp fibres from recycled waste paper suspended in the process liquid comprising water, wherein the suspended material is subjected to a lignin-preserving bleaching. Thereby, the detrimental substances at least comprise synthetic organic material, such as toner, wherein the carbon dioxide is added to the process liquid before the bleaching, so that the synthetic organic material is fixed onto the suspended material.

In a fourth preferred embodiment of the invention, the suspended material comprises pulp fibres of mechanical pulp suspended in the process liquid comprising water with an addition of sodium hydroxide, wherein the suspended material is subjected to a lignin-preserving bleaching with hydrogen peroxide (H₂O₂) and thereafter is brought to a paper machine after an intermediate storage time. Thereby, the detrimental substances at least comprise dissolved organic material and residual peroxide-destroying metal ions, wherein the carbon dioxide is added to the process liquid before the intermediate storage time, so that the sodium hydroxide (NaOH) is converted to sodium bicarbonate (NaHCO₃) and the residual peroxide-destroying metal ions and the dissolved organic material are adhered to the suspended material. In this embodiment, the process liquid will exhibit a lower chemical oxygen demand (COD), which is advantageous from an environmental point of view, since the sodium bicarbonate gives less dissolution of organic compounds from the pulp fibres than sodium hydroxide would. Furthermore, the process liquid will have a higher content of residual peroxide originating from the hydrogen peroxide, which will give a higher brightness to the finished paper sheet.

In a fifth preferred embodiment of the invention, the suspended material comprises active sludge suspended in the process liquid comprising waste water, wherein the suspended material is subjected to dewatering. Thereby, the detrimental substances at least comprise dissolved organic material, such as biological polymers originating from the active sludge, wherein the carbon dioxide is added to the process liquid before the dewatering, so that the dissolved organic material is fixed onto the suspended material and the dewatering is facilitated.

In the following, the present invention will be illustrated further by means of two examples.

### Example 1

Laboratory samples of thermomechanical softwood pulp suspensions were extracted from a TMP-line after a hydrogen peroxide bleaching stage in a full-scale stock preparation department of a paper mill producing newsprint. One sample (CO1) was treated with an addition of gaseous carbon dioxide (CO₂), while a second sample was left untreated as a reference (REF1). The amount of carbon dioxide (CO₂) added was varied between 2 and 8 kg CO₂ per ton dry pulp, fibres with good results. The best results were obtained at an addition of 5.1 kg CO₂ per ton dry pulp fibres. The need for CO₂ addition is partially dependent on the concentration of sodium hydroxide in the process liquid. Brightness %ISO and pH of the pulp, Residual-peroxide and COD of the liquid phase were determined for the pulp samples as a function of storage time using brightness %ISO SCAN-P3:93, pH8-adjusted. The results are evident from Table 1A below.

**Table 1A**

| | H₂O₂ -bleach. TMP sample | Storage time at 75 °C and 10% consistency, h | | | |
|---|---|---|---|---|---|
| | | 0 | 3 | 6 | 10 |
| **pH** | REF1 | 7.9 | 8.2 | 8.3 | 8 |
| | CO1 | **7.9** | **7** | **7.3** | **7.3** |
| Brightness, | REF1 | 77.6 | 74.9 | 72.3 | 71.6 |
| %ISO, pH=8 | CO1 | **77.6** | **76.5** | **75.3** | **74.9** |
| Residual | REF1 | 0.27 | 0 | 0 | 0 |
| H₂O₂, kg/ton | CO1 | **0.27** | **0.27** | **0.27** | **0.18** |
| Diss. COD, | REF1 | 30.1 | 36.3 | 36.8 | 37.4 |
| kg/ton | CO1 | **30.1** | **26.7** | **27.2** | **27.7** |

Furthermore, the contents of a number of soluble metals in the water phase of the pulp suspension (REF1 and CO1 were determined with the use of appropriate techniques, for example ICP. The results, including pH, are evident from Table 1B below.

**Table 1B**

| | REF1 mg/l | CO1, mg/l | Reduction, % |
|---|---|---|---|
| P | 0.496 | 0.461 | 7 |
| Mg | 0.52 | 0.69 | - |
| S | 12 | 12 | - |
| K | 5.75 | 5.88 | - |
| Na | 413 | 412 | - |
| Cl | 11.6 | 11 | - |
| Mn | 0.08 | 0.04 | 50 |
| B | 0.003 | 0.003 | - |
| Cu | 0.03 | 0.03 | - |
| Fe | 0.08 | 0.05 | 38 |
| Zn | 0.398 | 0.169 | 58 |
| Mo | 0.003 | 0.003 | - |
| Al | 0.2 | 0.01 | 95 |
| Si | 44.7 | 25.2 | 44 |
| Ca | 5.12 | 5.05 | - |
| pH | 7.9 | 7 | |

As is evident from Tables 1A and 1B above, the H₂O₂- bleached TMP-sample treated with carbon dioxide (CO2) exhibited a more stable pH and a smaller brightness reduction during storage in comparison with the untreated pulp sample (REF1).

Furthermore, the carbon dioxide addition kept the residual peroxide level on a much higher, rather stable level and gave a lower COD in the water phase. Also the contents of several of the soluble metals in the water phase were reduced.

### Example 2

Laboratory pulp samples were extracted from the coated broke return line in a full-scale stock preparation department of a paper mill producing LWC-paper. One sample (CO2) was treated with an addition of gaseous carbon dioxide, while a second sample was left untreated as a reference (REF2). The amount of carbon dioxide (CO₂) added was varied between 2 and 8 kg CO₂ per ton dry pulp fibres with good results. The best results were obtained at an addition of 5.1 kg CO₂ per ton dry pulp fibres. Brightness %ISO of the pulp, and pH, COD and Colour (Pt-Co) of the liquid phase were determined for the samples after 0 and 4 h storage time at 60 °C and 5.4% consistency, using the appropriate pulp testing methods, e.g. brightness %ISO SCAN-P3:93, pH8-adjusted. The results are evident from Table 2A below.

**Table 2A**

| Coated broke | REF2, 0h | REF2, 4 h | **CO2, 4h** |
|---|---|---|---|
| pH | 8.4 | 8.4 | **7** |
| Brightness, %ISO, | 73.2 | 72.6 | **76.7** |
| pH 8.3 | | | |
| Diss. COD, mg/l | 2150 | 2180 | **1310** |
| Colour, Pt-Co | 30000 | 35600 | **1120** |

As is evident from the results in Table 2A above, the carbon dioxide treated broke sample (CO2) gave a lower pH and a higher brightness after 4 h storage time than the untreated broke pulp sample (REF2). Furthermore, the liquid phase of the sample (CO2) treated with carbon dioxide had a much lower COD and Colour than the reference sample (REF2) after 4 h of storage time.

Also in Example 2, the contents of a number of soluble metals in the water phase of the pulp suspension (REF2 and CO2) were determined with the use of appropriate techniques, for example ICP. The results, including pH, are evident from Table 2B below.

**Table 2B**

| | REF2. mg/l | CO2. mg/l | Reduction. % |
|---|---|---|---|
| P | 1.17 | 0.408 | 65 |
| Mg | 15 | 7.1 | 53 |
| S | 41.3 | 35.9 | 13 |
| K | 10.9 | 6.47 | 41 |
| Na | 300 | 300 | - |
| Cl | 10.4 | 10.1 | 3 |
| Mn | 0.128 | 0.041 | 68 |
| B | 0.078 | 0.015 | 81 |
| Cu | 0.029 | 0.014 | 52 |
| Fe | 1:92 | 0.054 | 97 |
| Zn | 0.081 | 0.036 | 56 |
| Mo | 0.003 | 0.003 | - |
| AI | 109 | 0.506 | 99 |
| Si | 122 | 21 | 83 |
| Ca | 830 | 265 | 68 |
| pH | 8.4 | 7.3 | |

As is evident from table 2B above, the addition of carbon dioxide to a water suspension of coated broke resulted in very significant reductions of the content of most soluble metals in the pulp filtrate.

As is evident from tables 1B and 2B above, the carbon dioxide addition did not affect the sodium content in the water phase in either example. This is important when the method according to the invention is applied in chemical or semi-chemical pulping processes; where sodium losses should be minimized.

The present invention should not be regarded as being limited to that which has been disclosed in the description or in the examples above. Instead, its scope is defined by the attached claims.

## Claims

1. A method for eliminating detrimental substances in a process liquid, having a first pH and, in addition to said detrimental substances, comprising metal ions and suspended material, wherein carbon dioxide is added to the process liquid in order to bring the process liquid to a second pH, lower than the first pH, **characterized in that** the metal ions comprise hydroxide builders selected from Al³⁺, Fe³⁺, Fe²⁺, Zn²⁺, Cu²⁺, or a combination of these and that the carbon dioxide (CO₂) is added in an amount which causes the second pH to be between 8 and 6.5, so that the carbon dioxide primarily forms bicarbonate ions (HCO₃⁻) having a pH-buffering effect and the metal ions primarily form metal hydroxides, whereafter the detrimental substances coagulate or agglomerate with the metal hydroxides and are adhered to the suspended material so that they become inactive.

2. A method according to claim 1,
**characterized in that** the suspended material with the detrimental substances adhered thereto is subsequently removed from the process liquid.

3. A method according to claim 1 or 2,
**characterized in that** the carbon dioxide is added in an amount which causes the second pH to be between 7 and 7.5.

4. A method according to claim 1, 2 or 3,
**characterized in that** the detrimental substances comprise dissolved or suspended organic material or synthetic, organic material, such as wood resin, fibre fines, biological polymers or latex.

5. A method according to any one of the preceding claims,
**characterized in that** the detrimental substances comprise dissolved or suspended inorganic material, originating from Ca, P, Si, Mg, Mn, Fe, Cu, Al, Zn, Si or K.

6. A method according to any one of the preceding claims,
**characterized in that** the process liquid is fresh water, a process liquor in a pulp manufacturing process, a process water in a paper manufacturing process, a liquid for the preparation of a paper coating composition, or waste water.

7. A method according to anyone of the preceding claims,
**characterized in that** the suspended material comprises cellulose fibres, kaolin particles or active sludge.

8. A method according to any one of the preceding claims,
**characterized in that** the suspended material with the thereto fixed metal ions and detrimental substances is used for paper manufacturing or is incinerated with heat recovery.

9. A method according to any one of the preceding claims,
**characterized in that** the brightness of the suspended material, measured according to SCAN-P3:93, is stabilized or raised by means of the method.

10. A method according to any one of claims 1 - 9, wherein the suspended material comprises wood-containing pulp fibres which are subjected to a lignin-preserving bleaching in at least one bleaching stage and thereafter are stored in a storage tank during a retention time, **characterized in that** the carbon dioxide is added upstream or in the storage tank, so that the brightness loss of the wood-containing pulp fibres, measured according to SCAN-P3:93, is less than 3 ISO%-units during the retention time.

11. A method according to any one of claims 1 - 9, wherein the suspended material originates from paper broke coated with a coating composition, and said paper broke after desintegration is stored in a paper broke tank during a storage time before being brought to a paper machine, **characterized in that** the carbon dioxide is added upstream or in the paper broke tank, so that the brightness of the wood-containing pulp fibres, measured according to SCAN-P3:93, is raised by at least 1 ISO%-units during the storage time.

12. A method according to any one of claims 1 - 8, wherein the suspended material comprises kaolin particles suspended in the process liquid comprising a sodium hydroxide liquour, **characterized in that** the detrimental substances comprise at least phosphorus (P), wherein the carbon dioxide is added to the process liquid, so that the suspended material obtains improved dewatering and a higher metal content, and the process liquid obtains a lower metal content.

13. A method according to any one of claims 1 - 9, wherein the suspended material comprises pulp fibres from recycled waste paper suspended in the process liquid comprising water, and the suspended material is subj ected to a lignin-preserving bleaching,
**characterized in that** the detrimental substances at least comprise synthetic organic material, wherein the carbon dioxide is added to the process liquid before the bleaching, so that the synthetic organic material is fixed onto the suspended material.

14. A method according to any one of claims 1 - 9, wherein the suspended material comprises pulp fibres of mechanical pulp suspended in the process liquid comprising water with an addition of sodium hydroxide, and the suspended material is subjected to a lignin-preserving bleaching with hydrogen peroxide (H₂O₂) and thereafter is brought to a paper machine after an intermediate storage time, **characterized in that** the detrimental substances at least comprise dissolved organic material and residual peroxide-destroying metal ions, wherein the carbon dioxide is added to the process liquid before th intermediate storage time, so that the sodium hydroxide (NaOH) is converted to sodiun bicarbonate (NaHCO₃) and the residual peroxide-destroying metal ions and the dissolved organic material is fixed onto the suspended material.

15. A method according to any one of claims 1 - 8, wherein the suspended material comprises active sludge suspended in the process liquid comprising waste water, and the suspended material is subjected to a dewatering, **characterized in that** the detrimental substances at least comprise dissolved organic material, such as biological polymers originating from the active sludge, wherein the carbon dioxide is added to the process liquid before the dewatering, so that the the dissolved organic material is fixed onto the suspended material and the dewatering is facilitated.

16. A method according to any one of claims 1 - 9, wherein the suspended material comprises pulp fibres suspended in the process liquid comprising water with high temporary hardness, and the pulp fibres are formed to a paper sheet in a paper machine at a process liquid temperature lower than + 40 °C, **characterized in that** the detrimental substances at least comprise dissolved calcium bicarbonate, wherein the carbon dioxide (CO₂) is added to the process liquid before the paper machine so that the dissolved calcium bicarbonate (Ca(HCO₃)₂) is converted to calcium carbonate (CaCO₃) which is fixed onto the suspended material.

## Patentansprüche

1. Verfahren zur Entfernung von schädlichen Bestandteilen aus einer Behandlungsflüssigkeit mit einem ersten pH, die neben den schädlichen Bestandteilen Metallionen und suspendiertes Material umfasst, wobei der Behandlungsflüssigkeit Kohlendioxid zugesetzt wird, um die Behandlungsflüssigkeit auf einen zweiten pH einzustellen, der niedriger ist als der erste pH, **dadurch gekennzeichnet, dass** die Metallionen Hydroxid-Gerüststoffe, ausgewählt aus Al⁵⁺, Fe³⁺, Fe²⁺, Zn²⁺, Cu²+ oder eine Kombination davon, umfassen und dass das Kohlendioxid (CO₂) in einer Menge zugesetzt wird, die den zweiten pH auf einen Wert zwischen 8 und 6,5 einstellt, sodass das Kohlendioxid in erster Linie Bicarbonationen (HCO₃⁻) mit pH-Pufferwirkung bildet und die Metallionen in erster Linie Metallhydroxide bilden, wonach die schädlichen Bestandteile mit den Metallhydroxiden ausflocken oder agglomerieren und an das suspendierte Material anhaften, sodass sie inaktiviert werden.

2. Verfahren nach Anspruch 1,
**dadurch gekennzeichnet, dass** das suspendierte Material mit den daran anhaftenden schädlichen Bestandteilen anschließend aus der Behandlungsflüssigkeit entfernt wird.

3. Verfahren nach Anspruch 1 oder 2,
**dadurch gekennzeichnet, dass** das Kohlendioxid in einer Menge zugesetzt wird, die den zweiten pH auf einen Wert zwischen 7 und 7,5 einstellt.

4. Verfahren nach Anspruch 1, 2 oder 3,
**dadurch gekennzeichnet, dass** die schädlichen Bestandteile gelöstes oder suspendiertes organisches Material oder synthetisches organisches Material, wie Holzharz, Fibrillen, biologische Polymere oder Latex umfassen.

5. Verfahren nach einem der vorstehenden Ansprüche,
**dadurch gekennzeichnet, dass** die schädlichen Bestandteile gelöstes oder suspendiertes anorganisches Material umfassen, das sich von Ca, P, Si, Mg, Mn, Fe, Cu, Al, Zn, Si oder K ableitet.

6. Verfahren nach einem der vorstehenden Ansprüche,
**dadurch gekennzeichnet, dass** die Behandlungsflüssigkeit Frischwasser, eine Behandlungsflotte in einem Zellstoffaufschlussverfahren, ein Behandlungswasser in einem Papierherstellungsverfahren, eine Flüssigkeit zur Herstellung einer Papierbeschichtungszusammensetzung oder Abwasser ist.

7. Verfahren nach einem der vorstehenden Ansprüche,
**dadurch gekennzeichnet, dass** das suspendierte Material Cellulosefasern, Kaolinteilchen oder Aktivschlamm umfasst.

8. Verfahren nach einem der vorstehenden Ansprüche,
**dadurch gekennzeichnet, dass** das suspendierte Material mit den daran anhaftenden Metallionen und schädlichen Bestandteilen zur Papierherstellung verwendet oder unter Wärmerückgewinnung verbrannt wird.

9. Verfahren nach einem der vorstehenden Ansprüche,
**dadurch gekennzeichnet, dass** der Weißgrad des suspendierten Materials, gemessen nach SCAN-P3:93, mittels des Verfahrens stabilisiert oder verbessert wird.

10. Verfahren nach einem der Ansprüche 1-9, wobei das suspendierte Material holzhaltige Zellstofffasern umfasst, die in wenigstens einem Bleichstadium einem Lignin nicht zerstörenden Bleichen unterworfen und danach während einer Verweilzeit in einem Lagertank aufbewahrt werden, **dadurch gekennzeichnet, dass** das Kohlendioxid vor oder in dem Lagertank zugesetzt wird, sodass der Weißgradverlust der holzhaltigen Zellstofffasern, gemessen nach SCAN-P3:93, während der Verweilzeit weniger als 3 ISO%-Einheiten beträgt.

11. Verfahren nach einem der Ansprüche 1-9, wobei das suspendierte Material aus Fertigungsausschuss von mit einer Beschichtungszusammensetzung beschichtetem Papier stammt und der Papierfertigungsausschuss nach der Zersetzung vor der Weiterleitung zur Papiermaschine während einer Verweilzeit in einem Tank für Papierfertigungsausschuss aufbewahrt wird, **dadurch gekennzeichnet, dass** das Kohlendioxid vor oder in dem Tank für Papierfertigungsausschuss zugesetzt wird, sodass der Weißgrad der holzhaltigen Zellstofffasern, gemessen nach SCAN-P3:93, während der Verweilzeit um wenigstens 1 ISO%-Einheit erhöht wird.

12. Verfahren nach einem der Ansprüche 1-8, wobei das suspendierte Material Kaolinteilchen umfasst, die in der Behandlungsflüssigkeit suspendiert sind, welche eine Natriumhydroxidflotte umfasst, **dadurch gekennzeichnet, dass** die schädlichen Bestandteile wenigstens Phosphor (P) umfassen, wobei das Kohlendioxid der Behandlungsflüssigkeit zugesetzt wird, so dass eine verbesserte Entwässerung und ein höherer Metallgehalt des suspendierten Materials und ein niedrigerer Metallgehalt der Behandlungsflüssigkeit erreicht wird.

13. Verfahren nach einem der Ansprüche 1-9, wobei das suspendierte Material Zellstofffasern aus wieder aufbereitetem Altpapier umfasst, die in der Behandlungsflüssigkeit mit Wasser suspendiert sind, und das suspendierte Material einem Lignin nicht zerstörenden Bleichen unterworfen wird,
**dadurch gekennzeichnet, dass** die schädlichen Bestandteile wenigstens synthetisches organisches Material umfassen, wobei das Kohlendioxid der Behandlungsflüssigkeit vor dem Bleichen zugesetzt wird, sodass das synthetische organische Material auf dem suspendierten Material fixiert wird.

14. Verfahren nach einem der Ansprüche 1-9, wobei das suspendierte Material Zellstofffasern aus Holzschliff umfasst, die in der Behandlungsflüssigkeit mit Wasser, der Natriumhydroxid zugesetzt wurde, suspendiert sind, und das suspendierte Material einem Lignin nicht zerstörenden Bleichen mit Wasserstoffperoxid (H₂O₂) unterworfen wird und anschließend nach einer Zwischenliegezeit zu einer Papiermaschine weitergeleitet wird, **dadurch gekennzeichnet, dass** die schädlichen Bestandteile wenigstens gelöstes organisches Material und Peroxid zersetzende Metallionenrückstände umfassen, wobei das Kohlendioxid der Behandlungsflüssigkeit vor der Zwischenliegezeit zugesetzt wird, sodass das Natriumhydroxid (NaOH) in Natriumbicarbonat (NaHCO₃) umgesetzt wird und die Peroxid zersetzenden Metallionenrückstände und das gelöste organische Material auf dem suspendierten Material fixiert werden.

15. Verfahren nach einem der Ansprüche 1-8, wobei das suspendierte Material Aktivschlamm umfasst, der in der Behandlungsflüssigkeit mit Abwasser suspendiert ist, und das suspendierte Material einer Entwässerung unterworfen wird, **dadurch gekennzeichnet, dass** die schädlichen Bestandteile wenigstens gelöstes organisches Material, wie aus dem Aktivschlamm stammende biologische Polymere, umfassen, wobei das Kohlendioxid der Behandlungsflüssigkeit vor der Entwässerung zugesetzt wird, sodass das gelöste organische Material auf dem suspendierten Material fixiert und die Entwässerung vereinfacht wird.

16. Verfahren nach einem der Ansprüche 1-9, wobei das suspendierte Material Zellstofffasern umfasst, die in der Behandlungsflüssigkeit mit Wasser mit vorübergehend hohem Härtegrad suspendiert sind, und die Zellstofffasern bei einer Temperatur der Behandlungsflüssigkeit von weniger als +40 °C in einer Papiermaschine zu einem Papierbogen ausgebildet werden, **dadurch gekennzeichnet, dass** die schädlichen Bestandteile wenigstens gelöstes Calciumbicarbonat umfassen, wobei das Kohlendioxid (CO₂) der Behandlungsflüssigkeit vor der Papiermaschine zugesetzt wird, sodass das gelöste Calciumbicarbonat (Ca(HCO₃)₂) in Calciumcarbonat (CaCO₃) umgewandelt wird, das auf dem suspendierten Material fixiert wird.

## Revendications

1. Méthode d'élimination de substances nuisibles dans un liquide de traitement, ayant un premier pH et, en plus desdites substances nuisibles, comprenant des ions métalliques et une matière en suspension, dans laquelle du dioxyde de carbone est ajouté au liquide de traitement afin de faire parvenir le liquide de traitement à un deuxième pH, plus bas que le premier pH, **caractérisée en ce que** les ions métalliques comprennent des adjuvants hydroxydes sélectionnés à partir de Al³⁺ , Fe³⁺, Fe²⁺, Zn²⁺, Cu²⁺, ou une combinaison de ceux-ci, et **en ce que** le dioxyde de carbone (CO₂) est ajouté dans une quantité qui produit un deuxième pH entre 8 et 6,5, de sorte que le dioxyde de carbone forme essentiellement des ions bicarbonates (HCO₃⁻) ayant un effet tampon sur le pH et que les ions métalliques forment essentiellement des hydroxydes métalliques, après quoi les substances nuisibles coagulent ou s'agglomèrent avec les hydroxydes métalliques et se fixent à la matière en suspension de sorte qu'elles deviennent inactives.

2. Méthode selon la revendication 1, **caractérisée en ce que** la matière en suspension à laquelle sont fixées les substances nuisibles est ensuite éliminée du liquide de traitement.

3. Méthode selon la revendication 1 ou 2, **caractérisée en ce que** le dioxyde de carbone est ajouté dans une quantité qui produit un deuxième pH entre 7 et 7,5.

4. Méthode selon la revendication 1, 2 ou 3, **caractérisée en ce que** les substances nuisibles comprennent des matières organiques dissoutes ou en suspension, ou des matières synthétiques, organiques, comme la résine provenant du bois, les fines de fibres, les polymères biologiques ou le latex.

5. Méthode selon l'une quelconque des revendications précédentes, **caractérisée en ce que** les substances nuisibles comprennent des matières inorganiques dissoutes ou en suspension, provenant de Ca, P, Si, Mg, Mn, Fe, Cu, Al, Zn, Si ou K.

6. Méthode selon l'une quelconque des revendications précédentes, **caractérisée en ce que** le liquide de traitement est de l'eau fraîche, une solution de traitement dans un procédé de fabrication de pâte à papier, une eau de traitement dans un procédé de fabrication de papier, un liquide pour la préparation d'une composition de couchage du papier, ou de l'eau usée.

7. Méthode selon l'une quelconque des revendications précédentes, **caractérisée en ce que** la matière en suspension comprend des fibres de cellulose, des particules de kaolin ou une boue activée.

8. Méthode selon l'une quelconque des revendications précédentes, **caractérisée en ce que** la matière en suspension à laquelle sont fixés les ions métalliques et les substances nuisibles est utilisée pour la fabrication du papier ou est incinérée avec récupération de chaleur.

9. Méthode selon l'une quelconque des revendications précédentes, **caractérisée en ce que** la blancheur de la matière en suspension, mesurée selon SCAN-P3:93, est stabilisée ou augmentée par la méthode.

10. Méthode selon l'une quelconque des revendications 1-9, **caractérisée en ce que** la matière en suspension comprend des fibres de cellulose technique qui sont soumises à un blanchiment préservant la lignine au cours d'au moins une étape de blanchiment, et sont ensuite conservées dans une cuve de stockage durant un temps de séjour, **caractérisée en ce que** le dioxyde de carbone est ajouté en amont ou dans la cuve de stockage, de sorte que la perte de blancheur des fibres de cellulose technique, mesurée selon SCAN-P3:93, soit inférieure à 3 % en unités ISO durant le temps de séjour.

11. Méthode selon l'une quelconque des revendications 1-9, dans laquelle la matière en suspension provient de cassés de fabrication enrobés d'une composition de couchage, et lesdits cassés de fabrication, après désintégration, sont conservés dans une cuve pour cassés de fabrication durant un temps de stockage, avant d'être introduits dans une machine à papier, **caractérisée en ce que** le dioxyde de carbone est ajouté en amont ou dans la cuve pour cassés de fabrication, de sorte que la blancheur des fibres de cellulose technique, mesurée selon SCAN-P3:93, soit augmentée d'au moins 1 % en unités ISO durant le temps de stockage.

12. Méthode selon l'une quelconque des revendications 1-8, dans laquelle la matière en suspension comprend des particules de kaolin en suspension dans le liquide de traitement comprenant une solution d'hydroxyde de sodium, **caractérisée en ce que** les substances nuisibles comprennent au moins le phosphore (P), dans laquelle le dioxyde de carbone est ajouté au liquide de traitement, de façon à améliorer la déshydratation de la matière en suspension et à augmenter la teneur en métal de celle-ci, et à diminuer la teneur en métal du liquide de traitement.

13. Méthode selon l'une quelconque des revendications 1-9, dans laquelle la matière en suspension comprend des fibres de cellulose provenant de déchets de papier recyclés en suspension dans le liquide de traitement comprenant de l'eau, et la matière en suspension est soumise à un blanchiment préservant la lignine, **caractérisée en ce que** les substances nuisibles comprennent au moins une matière organique synthétique, dans laquelle le dioxyde de carbone est ajouté au liquide de traitement avant le blanchiment, de sorte que la matière organique synthétique soit fixée sur la matière en suspension.

14. Méthode selon l'une quelconque des revendications 1-9, dans laquelle la matière en suspension comprend des fibres de cellulose de pâte mécanique en suspension dans le liquide de traitement comprenant de l'eau additionnée d'hydroxyde de sodium, et la matière en suspension est soumise à un blanchiment préservant la lignine avec du peroxyde d'hydrogène (H₂O₂) et est ensuite introduite dans une machine à papier après un temps de stockage intermédiaire, **caractérisée en ce que** les substances nuisibles comprennent au moins une matière organique dissoute et des ions métalliques détruisant le peroxyde résiduel, dans laquelle le dioxyde de carbone est ajouté au liquide de traitement avant le temps de stockage intermédiaire, de sorte que l'hydroxyde de sodium (NaOH) soit converti en bicarbonate de sodium (NaHCO₃) et que les ions métalliques détruisant le peroxyde résiduel et la matière organique dissoute soient fixés sur la matière en suspension.

15. Méthode selon l'une quelconque des revendications 1-8, dans laquelle la matière en suspension comprend une boue activée en suspension dans le liquide de traitement comprenant l'eau usée, et la matière en suspension est soumise à une déshydratation, **caractérisée en ce que** les substances nuisibles comprennent au moins une matière organique dissoute, par exemple des polymères biologiques provenant de la boue activée, dans laquelle le dioxyde de carbone est ajouté au liquide de traitement avant la déshydratation, de sorte que la matière organique dissoute soit fixée sur la matière en suspension et que la déshydratation soit facilitée.

16. Méthode selon l'une quelconque des revendications 1-9, dans laquelle la matière en suspension comprend des fibres de cellulose en suspension dans le liquide de traitement comprenant de l'eau à dureté temporairement élevée, et les fibres de cellulose sont utilisées pour former une feuille de papier dans une machine à papier à une température de liquide de traitement inférieure à +40 ºC, **caractérisée en ce que** les substances nuisibles comprennent au moins du bicarbonate de calcium dissous, dans laquelle le dioxyde de carbone (CO₂) est ajouté au liquide de traitement avant la machine à papier de sorte que le bicarbonate de calcium dissous (Ca(HCO₃)₂) soit converti en carbonate de calcium (CaCO₃) qui est fixé sur la matière en suspension.
